# EUROPEAN PATENT APPLICATION

(11) **EP 4 840 323 A2**
(43) Date of publication of application: **18.11.2026**
(21) Application number: 26190159.9
(22) Date of filing: 22.09.2023
(51) Int. Cl.: A23L 33/00

(54) **A PROCESS OF PREPARING AN ENTERAL NUTRITIONAL COMPOSITION**

(30) Priority: 23.09.2022 EP 22197491
(62) Document number(s) of the earlier application(s) in accordance with Art. 76 EPC: 23776943.5 / 4 590 134
(71) Applicant: N.V. Nutricia, 2712 HM Zoetermeer (NL)
(72) Inventor: Arts, Anke, 3584 CT Utrecht (NL); Rademakers, Evert Luuk, 3584 CT Utrecht (NL); Halsema, Daniël Georg Reinhold, 3584 CT Utrecht (NL)
(74) Representative: Nederlandsch Octrooibureau

(57) **Abstract**

A process of preparing a shelf-stable liquid enteral nutritional composition, said process comprising the steps of providing an oil-in-water emulsion, sterilizing the emulsion by direct steam injection (DSI) to obtain a sterilized emulsion with a F₀ value of at least 3 and subjecting the sterilized emulsion to high pressure homogenization.

## Description

### Field of the invention

The present invention relates to a process of preparing a shelf-stable liquid enteral nutritional composition, said process comprising a sterilization step with direct heating followed by a high pressure homogenization step.

### Background of the invention

Heat treatment of nutritional compositions, such as pasteurization or sterilization, are needed to ensure product safety and quality. Depending on the properties of the product, such as pH, water activity (A_{w}), food matrix, viscosity, uniformity, storage temperature and desired shelf life, the type of heat treatment is determined to guarantee product safety.

"Commercial sterility" of a food product is defined as the absence of microorganisms capable of growing in the product at normal (non-refrigerated) conditions at which the food is likely to be held during manufacture, distribution and storage.

When a food product is stored at ambient temperature, the biggest safety concern is *Clostridium botulinum* growth. This microorganism is a spore former, highly heat resistant, grows at pH equal or higher than 4.5 and is strictly anaerobic. Therefore, if these microorganisms survive in heated foods, and the conditions are favourable for growth, they could potentially grow in areas in the absence of oxygen.

The F₀ value is a measure of the combined effect of time and temperature on the sterilization of *C. botulinum* spores. It is calculated by the following formula: ${F}_{0} = t \times {10}^{\frac{T - 121.1 ° C}{z ° C}}$

Wherein t = sterilization time in minutes and wherein T is the sterilization temperature in °C. The z-value is specific for each micro-organism, and indicates the temperature increase needed to achieve a tenfold reduction in time. For *C. botulinum* the z-value is 10.

Sterilization (F₀ ≥ 3) is applied to obtain commercial sterility for products with a longer product shelf life. The heat treatment of products with a shorter shelf life is usually milder and in most cases combined with other hurdles for microbial growth such as acidity, water activity (Aw) and refrigeration. The milder heat treatment is most often a pasteurization step (*e.g.* 72°C for 15s).

Heat treatment of nutritional compositions can be done by direct or indirect heating. An example of direct heating is Direct Steam Injection - DSI. The nutritional composition is brought into direct contact with hot steam under strictly controlled conditions. The sterilization temperature is rapidly reached and after holding, the temperature is lowered by flash cooling in a vacuum vessel. The rapid heating and cooling introduces minimal heat-load to the nutritional composition.

When using indirect heating, a partition is placed between the nutritional composition and the heating or cooling medium. The principle is that a hot medium is flowing on one side of the partition and the nutritional composition on the other. The partition is heated up and transfers the heat over to the nutritional composition flow without any direct contact between the hot medium and the nutritional composition. The same principle applies to cooling. Examples of indirect heating equipment are plate heat exchangers, tubular heat exchangers or scraped-surface heat exchangers.

Within the category of liquid enteral nutritional dairy compositions there are different types, such as coffee creamers, medical nutritional compositions, high caloric nutritional compositions, high whey protein nutritional compositions, infant nutrition and so on. Each have their own challenges, not only with regards to shelf stability, but also with regards to the ease of consumption and attractiveness for consumers or patients.

For example, liquid enteral nutritional compositions with high whey protein levels at neutral pH, pose a challenge to prepare. High temperatures required for sterilization lead to denaturation of whey proteins followed by aggregation leading to increased turbidity or increased viscosity, and/or may lead to gelling of the composition. As a result, liquid, shelf-stable nutritional compositions with high levels of native whey proteins are scarce or contain relatively low amounts of whey proteins, *i.e.* typically lower than 8 wt.% of the product.

The present invention relates to such a shelf-stable liquid enteral nutritional composition with lower levels of whey protein. A typical process for preparing these compositions includes the following steps:
a. Combining an aqueous phase - with water-soluble ingredients including protein - with an oil phase to obtain an oil-in-water emulsion;
b. Pasteurizing the oil-in-water emulsion to obtain a pasteurized oil-in-water emulsion;
c. Applying a first high pressure homogenization to obtain an oil-in-water emulsion with reduced oil droplet size. The smaller the oil droplet size, the more stable the oil-in-water emulsion is;
d. Cooling and cold storage of the homogenized oil-in-water emulsion;
e. Sterilizing the homogenized oil-in-water emulsion by ultra-high temperature (UHT) treatment with an indirect heating method;
f. Applying a second high pressure homogenization to the sterilized water-in-oil emulsion to further reduce the oil droplet size to improve the stability of the end product.

In the field it is considered essential for the stability of these types of products to apply both a pasteurization step and a sterilization step and to apply a high pressure homogenization step before and after the sterilization step.

*E.g.* WO2007050521 describes the preparation of ready-to-drink infant formulas. In Examples 1.1-1.3, the preparation of infant formulas are described, by preparing a carbohydrate-mineral slurry comprising water and non-fat dry milk, separately preparing a protein-oil mix, and mixing the protein-oil mix with the carbohydrate-mineral slurry, adjusting the pH to 6.68-6.75, heating to 71-82 °C, emulsifying through a single stage homogenizer at 900-1100 psig (62-76 Bar), heating to 146 °C for about 5 seconds, flash-cooling, and subjecting the cooled blend to homogenization at 3900-4100 / 400-600 psig (269-283 / 28-41 Bar). After standardization and pH adjustment, the completed product is then placed in suitable containers and subjected to terminal sterilization.

### Summary of the invention

The inventors of the present invention have surprisingly found that shelf-stable liquid enteral nutritional compositions with lower levels of whey protein can be prepared in a more efficient process. Compared to the standard processing method in the art, as described herein before, no pasteurization step and no high pressure homogenization is required before the sterilization step when this sterilization step is performed by Direct Steam Injection (DSI).

It was unexpectedly found that the heat treatment with DSI, besides sterilizing, also had a beneficial effect on the obtained particle size distribution of the nutritional composition following the high pressure homogenization step after the sterilization step. A more uniform particle size distribution and a more uniform distribution of the ingredients in the nutritional composition was obtained.

In addition, the process according to the invention has a lower carbon footprint compared to the conventional process, even though DSI sterilization requires more energy compared to sterilization through indirect heating. The carbon footprint is reduced by omitting the pasteurization step and the high pressure step before the sterilization step.

Besides a more efficient process, the process according to the invention resulted in products which have a more appealing colour and a better taste, *e.g.* less fishy taste when fish oil is present in the product.

More particularly, the present invention provides a process of preparing a shelf-stable liquid enteral nutritional composition, said composition comprising by weight of the composition:
- 0.5-13 wt.% protein, wherein the protein comprises at most 7 wt.% of whey protein by weight of the composition;
- 2-10 wt.% oil;
- 6-30 wt.% digestible carbohydrate;
- 50-90 wt.% water;
said process comprising the steps of:
a. providing an oil-in-water emulsion, wherein the particles in the emulsion have a volume-weighted mode diameter of at least 3 µm;
b. sterilizing the emulsion by direct steam injection (DSI) to obtain a sterilized emulsion with a F₀ value of at least 3;
c. subjecting the sterilized emulsion to high pressure homogenization at a total pressure of at least 200 bar to obtain the nutritional composition, wherein the particles in the nutritional composition have a volume-weighted mode diameter of less than 2 µm.

### Detailed description of the invention

A first aspect of the invention thus pertains to a process of preparing a shelf-stable liquid enteral nutritional composition, said composition comprising by weight of the composition:
- 0.5-13 wt.% protein, wherein the protein comprises at most 7 wt.% of whey protein by weight of the composition;
- 2-10 wt.% oil;
- 6-30 wt.% digestible carbohydrate;
- 50-90 wt.% water;
said process comprising the steps of:
a. providing an oil-in-water emulsion, wherein the particles in the emulsion have a volume-weighted mode diameter of at least 3 µm;
b. sterilizing the emulsion by direct steam injection (DSI) to obtain a sterilized emulsion with a F₀ value of at least 3;
c. subjecting the sterilized emulsion to high pressure homogenization at a total pressure of at least 200 bar to obtain the nutritional composition, wherein the particles in the nutritional composition have a volume-weighted mode diameter of less than 2 µm.

The term "shelf-stable nutritional composition" as used herein refers to nutritional compositions that do not require refrigeration and have a shelf-life of at least 3, preferably 6 months.

The term "shelf-life" as used herein is the period, starting from its manufacturing date, during which the product remains suitable for consumption.

The term "ambient temperature" as used herein refers to a temperature of 15-30 °C, preferably 20-25 °C, most preferably 20 °C.

The term "enteral nutritional composition" as used herein refers to nutritional compositions that are consumed orally or are administrated via a tube directly into the gastro-intestinal tract.

The term "oil" as used herein refers to the sum of one or more selected from the group consisting of free fatty acids, monoglycerides, diglycerides and triglycerides and polar lipids (such as phospholipids, cholesterol, glycolipids, sphingomyelin). The terms "lipid", "oil" and "fat" will be used interchangeably herein and will have equal meaning.

The volume of the particles and its size distribution can suitably be determined using a particle size analyzer such as Mastersizer 2000 (Malvern Instruments, Malvern, UK), for example by the method described in Michalski et al., 2001, Lait 81: 787-796.

The volume-weighted mode diameter relates to the diameter of the particles which is the most present based on volume percentage of total lipid, or the peak value in a graphic representation, having on the X-as the diameter and on the Y-as the volume % of total lipid.

The term "high pressure homogenization at a total pressure" as used herein refers to the addition of one or more pressure steps used in one single homogenization apparatus.

The term "viscosity" as used herein refers to the viscosity as measured using an Anton Paar Physica MCR301 rheometer with a CP50-1/PC cone (diameter 50 mm, 1° difference between middle and outside) at 20 °C at 100 s⁻¹.

### Step a)

The process comprises the step of providing an oil-in-water emulsion, wherein the particles in the emulsion have a volume-weighted mode diameter of at least 3 µm. Preferably the volume-weighted mode diameter of the particles in the oil-in water emulsion is between 3.5-20 µm, more preferably between 4-15 µm and most preferably between 4.5-10 µm.

Preferably, the oil-in-water emulsion is prepared by:
- providing an aqueous phase comprising the water and water-soluble ingredients;
- providing an oil phase, comprising the oil and the lipid ingredients;
- emulsification of the aqueous phase and oil phase to obtain an oil-in-water emulsion with particles having a volume-weighted mode diameter of at least 3 µm.

Preferably, the emulsification of the aqueous phase and the oil phase to obtain an oil-in-water emulsion is performed at low shear conditions. The emulsification of the aqueous phase and the oil phase at low shear conditions is preferably performed by a homogenizer with a total pressure of at most 150 bar, by an in-line mixer and/or by in-line dosing of the oil phase to the aqueous phase. More preferably, the emulsification of the aqueous phase and the oil phase is performed by an in-line mixer and/or by in-line dosing of the oil phase to the aqueous phase. Most preferably the emulsification of the aqueous phase and the oil phase is performed by an in-line mixer.

During the preparation of the oil-in-water emulsion in step a) preferably a heat treatment to at most 80 °C is be applied, more preferably a heat treatment to 40-70 °C and most preferably a heat treatment to 50-60°C is applied.

The provided oil-in-water emulsion of step a) preferably has a pH above 6.0, more preferably a pH of above 6.2, even more preferably a pH between 6.4-8.0 and most preferably a pH between 6.5-7.5.

The provided oil-in-water emulsion of step a) preferably has a dry-matter content of at least 5 wt.% by weight of the oil-in-water emulsion, more preferably a dry-matter content between 10-50 wt.% by weight of the oil-in-water emulsion.

### Step b)

The process comprises the step of sterilizing the emulsion by direct steam injection (DSI) to obtain a sterilized emulsion with a F₀ value of at least 3.

Preferably, the sterilizing is done by an ultra-high temperature (UHT) treatment with DSI. More preferably this UHT treatment with DSI is performed at a temperature of at least 135 ⁰C for 1-20 seconds provided that the F₀ is at least 3. Even more preferably this UHT treatment with DSI is performed at a temperature between 140-160 ⁰C for 3-15 seconds, and most preferably at 145-155 ⁰C for 5-10 seconds, provided that the F₀ is at least 3.

Preferably the sterilized emulsion has a F₀ value between 3-130, more preferably between a F₀ value 4-95 and most preferably a F₀ value between 5-60.

In a preferred embodiment, step b) in the process is the sole sterilization step in the process.

### Step c)

The process comprises the step of subjecting the sterilized emulsion to high pressure homogenization at a total pressure of at least 200 bar to obtain the nutritional composition, wherein the particles in the nutritional composition have a volume-weighted mode diameter of less than 2 µm.

The particles in the nutritional composition preferably have a volume-weighted mode diameter of less than 1.6 µm, more preferable less than 1.2 µm and more preferably a volume-weighted mode diameter between 0.1- 0.8 µm.

In a preferred embodiment, the volume-weighted mode diameter of the particles in the nutritional composition is at least 1 µm reduced, compared to the volume-weighted mode diameter of the particles in the oil-in-water emulsion, due to the high pressure homogenization step in step c). More preferably, the volume-weighted mode diameter of the particles in the nutritional composition is at least 1.5 µm reduced, compared to the volume-weighted mode diameter of the particles in the oil-in-water emulsion, due to the high pressure homogenization step in step c). Most preferably, the volume-weighted mode diameter of the particles in the nutritional composition is at least 2 µm reduced, compared to the volume-weighted mode diameter of the particles in the oil-in-water emulsion, due to the high pressure homogenization step in step c).

Preferably, the high pressure homogenization is performed at a total pressure of 250-1500 bar, more preferably at a total pressure of 300-1200 bar and most preferably at a total pressure of 350-800 bar.

Preferably, the high pressure homogenization is performed at temperature of at most 90°C, more preferably at a temperature between 40-80°C and most preferably the high pressure homogenization is performed at a temperature between 50-60°C.

Preferably, after step c) of the process, the obtained nutritional composition is aseptically packaged in a packaging with a volume of 50 to 2000 ml to obtain a packaged nutritional composition. Preferably the packaging has a volume of 75 to 1000 ml and more preferably the packaging has a volume of 100 to 500 ml. Preferably the packaging is a laminated paperboard packaging (e.g. Tetra Pak ^{®}) or a bottle.

Preferably, the packaged nutritional composition has a shelf-life at least 6 months at ambient temperature. More preferably, the packaged nutritional composition has a shelf-life of at least 9 months at ambient temperature, most preferably the packaged nutritional composition has a shelf-life of at least 12 months at ambient temperature.

### Nutritional composition

The shelf-stable liquid enteral nutritional composition obtainable by the process comprises by weight of the composition:
- 0.5-13 wt.% protein, wherein the protein comprises at most 7 wt.% of whey protein by weight of the composition;
- 2-10 wt.% oil;
- 6-30 wt.% digestible carbohydrate;
- 50-90 wt.% water.

Preferably the nutritional composition has a pH above 6.0, more preferably a pH above 6.2, even more preferably a pH between 6.4-8.0 and most preferably a pH between 6.5-7.5.

Preferably the nutritional composition has a caloric density of 55-250 kcal/100 ml, more preferably a caloric density of 57-215 kcal/100 ml, and most preferably a caloric density of 60-180 kcal/100ml.

Preferably the nutritional composition has a viscosity of 0.1-200 MPa·s, more preferably a viscosity of 0.5-160 MPa·s and most preferably a viscosity of 1-120 MPa·s.

The nutritional composition preferably comprises 0.75-12 wt.% protein by weight of the composition, more preferably 1-10.5 wt.% protein, and most preferably 1.25-9 wt.% protein by weight of the composition.

Preferably, less than 1 wt.% of the protein in the nutritional composition is hydrolyzed, more preferably less than 0.5 wt.% of the protein in the nutritional composition is hydrolyzed.

Preferred protein sources are dairy protein, plant protein and combinations thereof.

In a preferred embodiment wherein the nutritional composition comprises dairy protein, the dairy protein is selected from casein, caseinate, whey protein and combinations thereof. More preferably the dairy protein is selected from casein, caseinate and combinations thereof. Most preferably the dairy protein is casein.

The nutritional composition preferably comprises at most 6 wt.% whey protein by weight of the composition, more preferably 0.1-4.5 wt.% whey protein, and most preferably 0.2-3 wt.% whey protein by weight of the composition.

Preferably, the nutritional composition does not comprise whey protein micelles or chemically modified dairy protein, such as enzymatically cross-linked dairy protein.

In a preferred embodiment wherein the nutritional composition comprises plant protein, the plant protein is selected from soy protein, pea protein, potato protein, oat protein, almond protein, rice protein and combinations thereof.

The nutritional composition preferably comprises 2.2-9.8 wt.% oil by weight of the composition, more preferably 2.5-9.5 wt.% oil by weight of the composition.

Preferably, the nutritional composition comprises at least 40 wt.% vegetable oil by weight of the oil, more preferably at least 60 wt.% vegetable oil by weight of the oil and most preferably 80-100 wt.% vegetable oil by weight of the oil.

Preferred vegetable oil sources in the nutritional composition are linseed oil (flaxseed oil), rape seed oil (such as colza oil, low erucic acid rape seed oil and canola oil), sunflower oil, high oleic sunflower oil, safflower oil, high oleic safflower oil, olive oil, coconut oil, palm oil, palm kernel oil and combinations thereof.

Preferred non-vegetable oil sources in the nutritional composition are milk fat, fish oil, microbial oil, algae oil and combinations thereof.

The nutritional composition preferably comprises 10-50 wt.% of LCPUFA by weight of the oil. More preferably 12.5-40 wt.% of LCPUFA, and most preferably 15-35 wt.% of LCPUFA, by weight of the oil.

Preferred LCPUFA are DHA, EPA, ARA, LA, ALA and combinations thereof. DHA refers to docosahexaenoic acid and/or acyl chain (22:6, n3); EPA refers to eicosapentaenoic acid and/or acyl chain (20:5 n3); ARA refers to arachidonic acid and/or acyl chain (20:4 n6). LA refers to linoleic acid and/or acyl chain (18:2 n6); ALA refers to alpha-linolenic acid and/or acyl chain (18:3 n3).

The nutritional composition preferably comprises 6.5-28 wt.% digestible carbohydrate by weight of the composition, more preferably 7-26 wt.% digestible carbohydrate by weight of the composition.

Preferred digestible carbohydrate in the nutritional composition are lactose, glucose, sucrose, fructose, galactose, maltose, maltodextrin and combinations thereof.

Other preferred ingredients are one or more of vitamins, minerals, non-digestible oligosaccharides, phospholipids, antioxidants, emulsifiers, nucleotides, choline, phospholipids and taurine.

The nutritional composition preferably comprises 10-50 wt.% water by weight of the composition, more preferably 11-48 wt.% water, and most preferably 12-46 wt.% water by weight of the composition.

The nutritional composition preferably comprises 0.5-500 mg/100ml divalent metal cations selected from Ca and/or Mg, more preferably 1-400 mg/100ml divalent metal cations selected from Ca and/or Mg.

The nutritional composition preferably comprises 1-200 mg/100ml vitamin C, more preferably 2-150 mg/100ml vitamin C, and most preferably 4-125 mg/100ml vitamin C.

The nutritional composition preferably comprises 0-300 µg/100ml vitamin A, more preferably 25-225 µg/100ml vitamin A, and most preferably 50-150 µg/100ml vitamin A.

The nutritional composition preferably comprises 0.1-60 mg/100ml vitamin E, more preferably 0.5-40 mg/100ml vitamin E, and most preferably 1-20 mg/100ml vitamin E.

The nutritional composition preferably does not comprise a thickening agent, more preferably the nutritional composition does not comprise starch, carrageenan and combinations thereof.

Preferably, the nutritional composition is an infant milk formula and/or a medical nutritional composition.

In a particularly preferred embodiment of the invention, the nutritional composition is an infant milk formula. Preferably, infant milk formula is selected from infant formula, follow-on formula, or young child formula.

More preferably, the nutritional composition is infant milk formula, wherein the nutritional composition comprises by weight of the composition:
- 0.5-3 wt.% protein, wherein the protein comprises at most 2.5 wt.% of whey protein by weight of the composition;
- 2-5 wt.% oil;
- 6-10 wt.% digestible carbohydrate;
- 82-90 wt.% water

wherein the particles in the infant milk formula have a volume-weighted mode diameter of less than 2 µm.

Most preferably, the nutritional composition is infant milk formula, wherein the nutritional composition comprises by weight of the composition:
- 1-2 wt.% protein, wherein the protein comprises at most 1.6 wt.% of whey protein by weight of the composition;
- 2.5-4 wt.% oil;
- 7-9 wt.% digestible carbohydrate;
- 84-88 wt.% water
wherein the particles in the infant milk formula have a volume-weighted mode diameter between 0.1-0.8 µm.

The infant milk formula preferably comprises 0.1-10 wt.% of non-digestible oligosaccharides by weight of the nutritional composition. More preferably 0.2-7.5 wt.% of non-digestible oligosaccharides, and most preferably 0.4-5 wt.% of non-digestible oligosaccharides, by weight of the nutritional composition.

Preferred non-digestible oligosaccharides are human milk oligosaccharides, fructo-oligosaccharides, galacto-oligosaccharides or combinations thereof.

As used herein, infant formula refers to nutritional compositions, artificially made, intended for infants of 0 to about 4 to 6 months of age and are intended as a substitute for human milk. Typically, infant formulae are suitable to be used as sole source of nutrition. Such infant formulae are also known as starter formula. Follow-on formula for infants starting with at 4 to 6 months of life to 12 months of life are intended to be supplementary feedings to infants that start weaning on other foods. Infant formulae and follow-on formulae are subject to strict regulations, for example the EU regulations no. 609/2013 and no. 2016/127. As used herein, growing-up milk refers to nutritional compositions, artificially made, intended for infants and children of at least 12 months, which are intended to be supplementary feedings to infants or children.

In a particularly preferred alternative embodiment of the invention, the nutritional composition is a medical nutritional composition. Examples of medical nutritional compositions are nutritional compositions for patients with disease related malnutrition, patients with inherited metabolic disorders, stroke patients, patients with dysphagia, or patients with early Alzheimer.

More preferably, the nutritional composition is a medical nutritional composition and comprises by weight of the composition:
- 3-13 wt.% protein, wherein the protein comprises at most 7 wt.% of whey protein by weight of the composition;
- 2-12 wt.% oil;
- 8-30 wt.% digestible carbohydrate;
- 55-82 wt.% water
wherein the particles in the medical nutritional composition have a volume-weighted mode diameter of less than 1 µm.

Most preferably, the nutritional composition is a medical nutritional composition and comprises by weight of the composition:
- 3.5-10 wt.% protein, wherein the protein comprises at most 7 wt.% of whey protein by weight of the composition;
- 2.5-10 wt.% oil;
- 10-27 wt.% digestible carbohydrate;
- 55-82 wt.% water
wherein the particles in the medical nutritional composition have a volume-weighted mode diameter between 0.1-0.8 µm.

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the element. The indefinite article "a" or "an" thus usually means "at least one".

### FIGURES

*Figure 1**. Particle size distributions of different medical nutritional compositions (1, A, B) after sterilization and high pressure homogenization. Different sterilization technologies were compared.*
*Figure 2**. Particle size distrubutions of different oil-in-water emulsions (2, 3, C) which were emulsified by an inline mixer at various rotational speeds - before sterilization and high pressure homogenization.*
*Figure 3**. Particle size distrubutions of different oil-in-water emulsions (2, 3, C) which were emulsified by an inline mixer at various rotational speeds - after sterilization and high pressure homogenization.*

### EXAMPLES

### Example 1

Three liquid enteral medical nutritional compositions (as described in example 3) were prepared and they differed from each other in the type of heat treatment that was applied to sterilize these products.

### Production process

1) First the water-soluble ingredients except the minerals were dissolved in water using low-shear mixing technology. Minerals were dissolved separately in water and added to the main batch.
2) After addition of water-soluble ingredients, the batch was standardized by adjusting the pH to 6.8 (using potassium hydroxide) and optionally extra water was added to obtain the desired dry matter content.
3) The fat blend was heated to 60°C and mixed with an emulsifier. The fat blend was added to the rest of the batch ensuring that the oil is homogeneously distributed in the batch by applying low-shear mixing technology.
4) The batch was pre-heated to 90°C using a tubular heat exchanger. Subsequently the batches were commercially sterilized using different sterilization treatments, see table 1 below. Next the product was cooled down in two steps, first to 90°C and next to 65°C.
5) Next the batch was homogenized at high pressure with a total pressure of 600 bar.
6) Samples were taken from each batch to determine the particle size distribution (PSD), wherein particles include oil droplets. The PSD was determined using the Mastersizer.

**Table 1**

| **Batch** | **Sterilization treatment** |
|---|---|
| 1 | Direct steam injection (DSI) at 153°C for 3 sec |
| A | Tubular heat exchanger at 130°C for 120 sec |
| B | Tubular heat exchanger at 147°C for 8 sec |

### Results

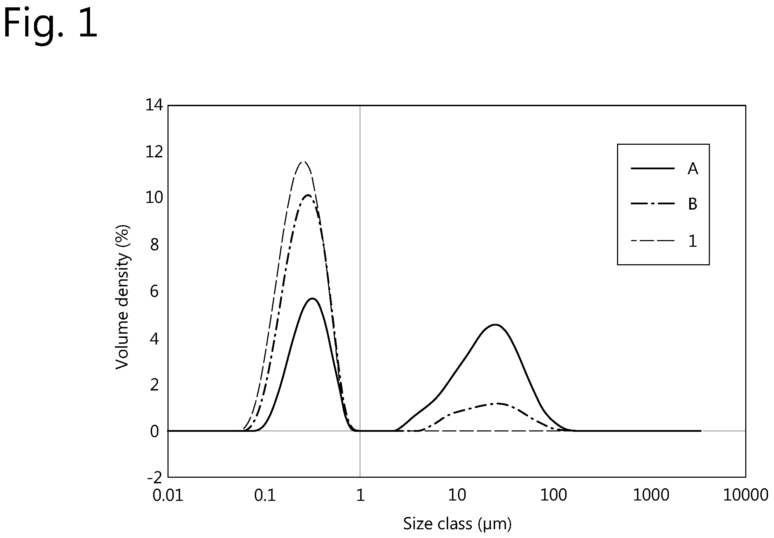

Figure 1 shows the PSD for the three batches. Batch 1 shows an uniform PSD with no particles with a diameter above 1 µm. Whereas Batch A and B show a less uniform PSD with two particle size subgroups, one in the range of 0.1-1 µm and one in the range of 10-100 µm. When the PSD is uniform and below 1 µm, the product will be more stable, e.g. less coalescence of oil droplets will occur.

This shows that the type of sterilization treatment used affects the final PSD of the enteral medical nutritional composition, when no high pressure homogenization step is applied to reduce the PSD of the batches before the sterilization treatment.

### Example 2

Three liquid enteral medical nutritional compositions (as described in example 3) were prepared and they differed from each other in the type of homogenization applied to emulsify the oil droplets in the oil-in-water emulsions before the sterilization treatment using DSI.

### Production process

The production process was similar to the process as described in example 1. The emulsification of the oils droplets in step 3) of the process was varied according to the conditions in Table 2. The sterilization treatment as described for Batch 1 in example 1 was applied. Samples were taken twice, once after the homogenization step 3) and once after the UHT treatment and the high-pressure homogenization. *i.e.* step 6). The PSD was determined for these samples.

**Table 2**

| **Batch** | **Rotational speed of rotor-stator inline mixer** |
|---|---|
| 2 | 0 rpm |
| 3 | 3500 rpm |
| C | 13000 rpm |

### Results

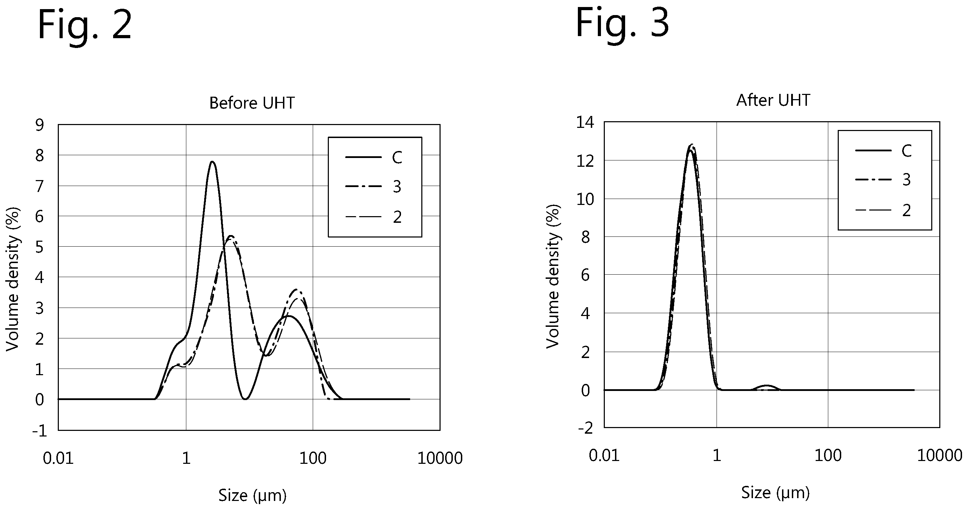

Figure 2 shows the PSD of the batches after the emulsification (step 3). The volume-based mode diameter of batch C is about 2.5 µm, while the volume-based mode diameter of batch 2 and 3 is about 5 µm.

Figure 3 shows the PSD of the batches after the production has been finalized. All three batches have a similar PSD with a volume-based mode diameter of about 0.3 µm.

This shows that, when DSI is used for the sterilization step, the high-pressure homogenization step before the sterilization step is not required to obtain a stable end-product with a uniform PSD.

### Example 3 - Follow-on formula

A shelf-stable liquid follow-on formula, intended for infants of 6 to 12 months of age, comprising per 100 ml:
- 66 kcal;
- 86 wt.% water;
- 1.4 wt.% protein comprising whey protein and casein in a weight ratio of 1:1;
- 8 wt.% digestible carbohydrates, mainly lactose;
- 3 wt.% fat comprising a blend of different vegetable oils, fish oil as a source of DHA and microbial oil as a source of ARA;
- 1.8 wt.% emulsifier comprising mono-and-diglycerides of fatty acids.
- 0.8 wt.% non-digestible oligosaccharides, comprising long chain fructo-oligosaccharides (source RaftilineHP) and trans-galacto-oligosaccharides (source Vivinal GOS) in a weight ratio of 1:9;
- minerals, vitamins and other micronutrients as according to directives for infant formula.

The follow-on formula has a pH of 6.9 and a viscosity of 2 mPa.s at 20°C.

### Example 4 - Medical nutritional composition

An shelf-stable liquid enteral medical nutritional composition for adults, suitable for patients with disease related malnutrition, comprising per 100 ml:
- 150 kcal;
- 70 wt.% water;
- 5 wt.% protein comprising caseinate;
- 18 wt.% digestible carbohydrates;
- 6 wt.% fat comprising a blend of different vegetable oils;
- 0.3 wt.% emulsifier comprising lecithin;
- minerals, vitamins and other micronutrients.

The medical nutrition product has a pH of 6.7 and a viscosity of 20 mPa.s at 20°C.

## Claims

1. A process of preparing a shelf-stable liquid enteral nutritional composition, said composition comprising by weight of the composition:
- 0.5-13 wt.% protein, wherein the protein comprises at most 7 wt.% of whey protein by weight of the composition;
- 2-10 wt.% oil;
- 6-30 wt.% digestible carbohydrate;
- 50-90 wt.% water;
said process comprising the steps of:
a. providing an oil-in-water emulsion, wherein the particles in the emulsion have a volume-weighted mode diameter of at least 3 µm;
b. sterilizing the emulsion by direct steam injection (DSI) to obtain a sterilized emulsion with a F₀ value of at least 3;
c. subjecting the sterilized emulsion to high pressure homogenization at a total pressure of at least 200 bar to obtain the nutritional composition, wherein the particles in the nutritional composition have a volume-weighted mode diameter of less than 2 µm.

2. The process according to claim 1, wherein the oil-in-water emulsion of step a) has a pH above 6.0.

3. The process according to claim 1 or 2, wherein the sterilizing is done by an ultra-high temperature (UHT) treatment with DSI.

4. The process according to claim 3, wherein the UHT treatment with DSI is performed at a temperature of at least 135 ⁰C for 1-20 seconds, provided that the F₀ is at least 3.

5. The process according to any one of the previous claims, wherein the F₀ value of the sterilized emulsion is between 3-130.

6. The process according to any one of the previous claims, wherein step b) is the sole sterilization step in the process.

7. The process according to any one of the previous claims, wherein the high pressure homogenization in step c) is performed at a total pressure of 250-1500 bar.

8. The process according to any one of the previous claims, wherein the oil-in-water emulsion in step a) is prepared by:
- providing an aqueous phase comprising the water and water-soluble ingredients;
- providing an oil phase, comprising the oil and the lipid ingredients;
- emulsification of the aqueous phase and oil phase to obtain an oil-in-water emulsion with particles having a volume-weighted mode diameter of at least 3 µm.

9. The process according to claim 8, wherein the emulsification is performed at low shear conditions.

10. The process according to claim 9, wherein the emulsification is performed by a homogenizer with a total pressure below 150 bar, by an in-line mixer and/or by in-line dosing of the oil phase to the aqueous phase.

11. The process according to any one of the previous claims, wherein the nutritional composition does not comprise whey protein micelles.

12. The process according to any of the preceding claims, wherein the oil comprises at least 40 wt.% vegetable oil by weight of the oil.

13. The process according to any one of the previous claims, wherein the nutritional composition is selected from infant milk formula or a medical nutritional composition.

14. The process according to claim 13, wherein the nutritional composition is an infant milk formula, selected from infant formula, follow-on formula or young child formula, wherein the nutritional composition comprises by weight of the composition:
- 0.5-3 wt.% protein, wherein the protein comprises at most 2.5 wt.% of whey protein by weight of the composition;
- 2-5 wt.% oil;
- 6-10 wt.% digestible carbohydrate;
- 82-90 wt.% water
wherein the particles in the obtained infant milk formula has a volume-weighted mode diameter of less than 2 µm.

15. The process according to claim 13, wherein the nutritional composition is medical nutritional composition and comprises by weight of the composition:
- 3-13 wt.% protein, wherein the protein comprises at most 7 wt.% of whey protein by weight of the composition;
- 2-12 wt.% oil;
- 8-30 wt.% digestible carbohydrate;
- 55-82 wt.% water
wherein the particles in the obtained medical nutritional composition has a volume-weighted mode diameter of less than 1 µm.
